# EUROPÄISCHE PATENTSCHRIFT

(11) **EP 1 047 255 B1**
(45) Veröffentlichungstag und Bekanntmachung des Hinweises auf die Patenterteilung: **19.11.2003**
(21) Anmeldenummer: 00108573.7
(22) Anmeldetag: 19.04.2000
(51) Int. Cl.: H04M 3/42, H04M 3/436

(54) **Kommunikationspartner-Verzeichnismodul, das einem Teilnehmer eines Kommunikationsnetzes zugeordnet ist**
Communication partner directory module assigned to a user of a communications network
Module de répertoire assigné à un utilisateur d'un réseau de transmissions

(30) Priorität: 21.04.1999 DE 19918043
(43) Veröffentlichungstag der Anmeldung: 25.10.2000
(73) Patentinhaber: SIEMENS AKTIENGESELLSCHAFT, 80333 München (DE)
(72) Erfinder: Remmele, Werner, 86415 Mering (DE); Schmiedel, Gabriele, 83627 Warngau (DE)

(56) Entgegenhaltungen:
- EP-A- 0 996 275
- WO-A-98/48542
- US-A- 5 524 146

## Beschreibung

Es sind Kommunikationspartner-Verzeichnismodule bekannt, die nicht einem speziellen Teilnehmer zugeordnet sind und die als Kommunikationspartner alle Teilnehmer eines bestimmten Netzbereiches, beispielsweise alle Teilnehmer eines Kommunikationsnetzbetreibers, alle Teilnehmer eines Firmenkommunikationsnetzes oder alle Teilnehmer einer privaten Nebenstellenanlage enthalten. Solche Verzeichnismodule haben in erster Linie die Funktion von Telefonbüchern; sie erleichtern dem Benutzer mit Hilfe einer Benutzeroberfläche ein einfaches Auffinden von Kommunikationspartnern. Speziell im Falle von Verzeichnismodulen, deren Kommunikationspartner die Teilnehmer eines Firmennetzes sind, sind für viele Teilnehmer, die über unterschiedliche Kommunikationsmöglichkeiten wie Telefonie, elektronische Mail, Facsimiledienst oder Bildtelefonie verfügen, Adressen für die einzelnen Kommunikationsarten gespeichert. Der Kommunikationsaufbau auf der Grundlage einer jeden Kommunikationsart wird mit Hilfe von sogenannten Links, d.h. einer speziellen Computersoftware, auf einer Benutzeroberfläche vereinfacht. So kann beispielsweise ein Teilnehmer, der das Kommunikationspartner-Verzeichnismodul benutzt, zunächst einen Kommunikationspartner auswählen, dann eine Kommunikationsart wählen, mit Hilfe derer er eine Kommunikation mit diesem Kommunikationspartner wünscht und auf einfache Weise einen Kommunikationsvorgang veranlassen. Eine solche Benutzeroberfläche ist, insbesondere bei einer Vielzahl von Kommunikationsarten, mit Hilfe derer ein Kommunikationsvorgang ausgeführt werden kann, relativ kompliziert aufgebaut, und ein Teilnehmer muß jedesmal eine von mehreren möglichen, angebotenen Kommunikationsarten auswählen, wie IN WO98/48542.

Es sind auch Kommunikationspartner-Verzeichnismodule bekannt, die einem Teilnehmer speziell zugeordnet sind. Solche Verzeichnismodule können, insbesondere wenn sie innerhalb einer Datenverarbeitungsanlage eines Teilnehmers realisiert sind oder mit Hilfe eines eine Datenverarbeitungsanlage darstellenden Endgerätes eines Teilnehmers benutzbar sind, durch Hinzufügen von Kommunikationspartnerdatensätzen aus allgemein zugänglichen Kommunikationspartnerverzeichnismodulen erstellt werden. Bei manchen einem Teilnehmer zugeordneten Kommunikationspartnerverzeichnismodulen ist es hierbei möglich, zusätzlich teilnehmerspezifische Informationen kommunikationspartnerspezifisch zu speichern. Wenn ein Teilnehmer mit Hilfe eines solchen ihm zugeordneten Kommunikationspartner-Verzeichnismoduls einen Kommunikationsvorgang zu einem von ihm ausgewählten Kommunikationspartner veranlassen will, kann er üblicherweise Kommunikationsparameter wie die Kommunikationsart oder den zu verwendenden Kommunikationsdiensteanbieter auswählen. Dies erfolgt üblicherweise durch Auswählen einer von mehreren Kommunikationsadressen zu diesem Kommunikationspartner. Das Auswählen dieser Adressen ist jedoch bei jedem erneuten Kommunikationsvorgang erforderlich. Normalfallwerte, auch Default-Werte genannt, die einen Kommunikationsaufbau zu einem ausgewählten Kommunikationspartner ohne zusätzliches Auswählen von Kommunikationsparametern ermöglichen, sind in bekannten Kommunikationspartner-Verzeichnismodulen nur für alle Kommunikationspartner gleichermaßen festlegbar.

Aufgabe der vorliegenden Erfindung ist es, einem Teilnehmer einen kommunikationspartnerspezifischen Kommunikationsaufbau unter Verwendung eines Kommunikationspartner-Verzeichnismoduls zu erleichtern.

Diese Aufgabe löst die Erfindung durch ein Kommunikationspartner-Verzeichnismodul mit den Merkmalen des Anspruchs 1. Ein solches Kommunikationspartner-Verzeichnismodul ist dem Teilnehmer zugeordnet und hat für jeden Kommunikationspartner dieses Teilnehmers jeweils einen Datensatz gespeichert. Dieser Datensatz enthält für jeden Kommunikationspartner Kommunikationsparameter-Normalfallwerte, sogenannte Default-Kommunikationsparameter, die für den Teilnehmer, dem das Kommunikationspartner-Verzeichnismodul zugeordnet ist und für den jeweiligen Kommunikationspartner spezifisch sind. Eine Prozessorsteuerung des Kommunikationspartnerverzeichnismoduls legt bei einem vom Teilnehmer veranlaßten Kommunikationsvorgang zu einem Kommunikationspartner Kommunikationsparameter fest. Hierbei verwendet die Prozessorsteuerung des Kommunikationspartnerverzeichnismoduls die für den Teilnehmer und den Kommunikationspartner spezifischen Kommunikationsparameter-Normalfallwerte, sofern der Teilnehmer für den aktuellen Kommunikationsvorgang keine hiervon abweichenden Kommunikationsparameter gewählt hat.

Da die Kommunikationsparameter-Normalfallwerte für jeden Kommunikationspartner spezifisch festlegbar sind, ermöglicht ein solches Kommunikationspartner-Verzeichnismodul ein einfaches Veranlassen eines Kommunikationsvorganges. Das Auswählen von Kommunikationsparametern wie zum Beispiel der Kommunikationsart oder des Kommunikationsdiensteanbieters ist für den Teilnehmer, dem dieses Kommunikationspartner-Verzeichnismodul zugeordnet ist, nicht erforderlich, selbst wenn er zu unterschiedlichen Kommunikationspartnern unterschiedliche, üblicherweise verwendete Kommunikationssparameter vorsieht.

In einer günstigen Ausgestaltungsform eines erfindungsgemäßen Kommunikationspartner-Verzeichnismoduls sind die für den Kommunikationspartner und für den Teilnehmer spezifisch gespeicherten Kommunikationsparameter-Normalfallwerte vom Teilnehmer wählbar. In einer anderen Ausgestaltungsform sind die Kommunikationsparameter-Normalfallwerte von ihrer Benutzung abhängig. So können beispielsweise jeweils die zuletzt verwendeten Kommunikationsparameter als Normalfallwerte gespeichert werden oder die bei einer bestimmten Anzahl der zuletzt durchgeführten Kommunikationsvorgänge am häufigsten verwendeten Kommunikationsparameter.

Die Prozessorsteuerung gemäß einer weiteren Ausführungsform eines erfindungsgemäßen Kommunikationspartner-Verzeichnismoduls ermöglicht ein statistisches Erfassen von vom Teilnehmer bezüglich eines Kommunikationspartners getroffenen Kommunikationsparametern sowie ein Vergleichen dieser vom Teilnehmer gewählten Kommunikationsparameter mit den gespeicherten Kommunikationsparameter-Normalfallwerten. Falls bei dieser Ausführungsform eines Kommunikationspartner-Verzeichnismoduls von der Prozessorsteuerung festgestellt wird, daß ein von dem gespeicherten Kommunikationsparameter-Normalfallwert abweichender Kommunikationsparameter häufiger gewählt wird als der gespeicherte Kommunikationsparameter-Normalfallwert, schlägt die Prozessorsteuerung diesen Kommunikationsparameter als neu zu speichernden Kommunikationsparameter-Normalfallwert vor. Häufiger kann in diesem Zusammenhang beispielsweise bedeuten, daß von den letzten fünf Kommunikationsvorgängen bei drei Kommunikationsvorgängen der vom gespeicherten Kommunikationsparameter-Normalfallwert abweichende Kommunikationsparameter gewählt wird.

Eine andere Ausführungsform eines erfindungsgemäßen Kommunikationspartnerverzeichnismoduls sieht vor, daß ein Kommunikationspartner von dem Teilnehmer, dem das Kommunikationspartnerverzeichnismodul zugeordnet ist, auf einer Benutzeroberfläche auswählbar ist. Hierbei veranlaßt die Prozessorsteuerung das auswählbare Anzeigen mehrerer Kommunikationsmöglichkeiten, wobei sie abhängig von den gespeicherten Kommunikationsparameter-Normalfallwerten eine dieser Kommunikationsmöglichkeiten vorausgewählt hat.

Bei Verwendung des zuletzt beschriebenen Ausführungsbeispiels eines Kommunikationspartnerverzeichnismoduls kann der Teilnehmer auf einer Benutzeroberfläche einen Kommunikationspartner auswählen und durch Bestätigen einer vorausgewählten Kommunikationsmöglichkeit ohne weitere Auswählvorgänge einen Kommunikationsvorgang, der seinen individuellen Wünschen entspricht, veranlassen. Darüber hinaus kann der Teilnehmer selbstverständlich durch einen Auswahlvorgang einen vom Normalfall abweichenden Kommunikationsvorgang ausführen.

In einer weiteren Ausführungsform eines erfindungsgemäßen Kommunikationspartner-Verzeichnismoduls besteht jeder Datensatz eines Kommunikationspartners aus einem allgemeinen Teil und einem spezifischen Teil. Hierbei enthält der allgemeine Datensatzteil unter anderem den Namen des Kommunikationspartners sowie dessen Kommunikationsadressen. Die für den Teilnehmer und den Kommunikationspartner spezifischen Kommunikationsparameter-Normalfallwerte sind hierbei in dem spezifischen Datensatzteil enthalten. Ein Kommunikationspartner-Verzeichnismodul mit derart aufgeteiltene Datensätzen ermöglicht beispielsweise das Aktualisieren der Datensätze durch Vergleichen von im allgemeinen Datensatzteil gespeicherten Daten mit den Daten eines aktuellen allgemeinen Kommunikationspartnerverzeichnisses. Bei einem solchen Aktualisierungsvorgang bleiben die in dem spezifischen Datensatzteil enthaltenen Daten unverändert.

Nachstehend wird die Erfindung unter Bezugnahme auf die Figuren anhand von unterschiedlichen Realisierungsformen von Kommunikationspartnerverzeichnismodulen näher erläutert. Darin zeigt:
- Figur 1: einen spezifischen Datensatz bei einem Ausführungsbeispiel eines Kommunikationspartnerverzeichnismoduls,
- Figuren 2 und 3: Realisierungsmöglichkeiten von jeweils einem Teilnehmer zugeordneten Kommunikationspartner-Verzeichnismodulen, und
- Figur 4: eine Mensch-Maschine-Schnittstelle, die Daten von einer Ausführungsform eines erfindungsgemäßen Kommunikationspartner-Verzeichnismoduls enthält, bzw. die zum Steuern eines solchen Kommunikationspartner-Verzeichnismoduls vorgesehen ist.

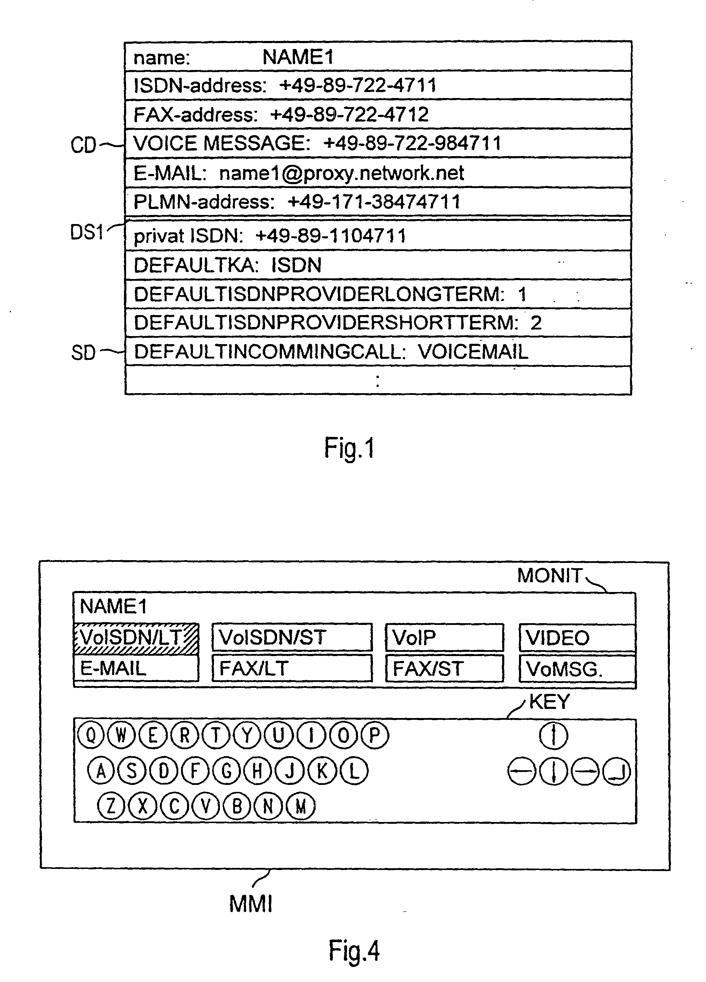

Figur 1 zeigt in schematischer Darstellung einen einen Kommunikationspartner definierenden Datensatz gemäß einem Ausführungsbeispiel eines erfindungsgemäßen Kommunikationspartner-Verzeichnismoduls. Der gezeigte Datensatz DS1 ist in einen allgemeinen Datensatzteil CD und einen spezifischen Datensatzteil SD aufgeteilt. Der allgemeine Datensatzteil CD enthält neben weiteren Daten den Namen des Kommunikationspartners, eine ISDN-Adresse +49-89-722-4711 des Kommunikationspartners, eine Fax-Adresse +49-89-722-4712 des Kommunikationspartners, eine Sprachnachrichten-Adresse +49-89-722-984711, eine E-Mail-Adresse name1@proxy.network.net und eine Mobilfunk-Adresse +49-171-38474711 des Kommunikationspartners. Der spezifische Datensatzteil enthält neben einer privaten ISDN-Adresse +49-89-1104711 des Kommunikationspartners einen Normalfallwert ISDN für eine Kommunikationsart DEFAULTKA, einen Normalfallwert 1 für einen ISDN-Dienstanbieter für länger dauernde Gespräche DEFAULTISDNPROVIDERLONGTERM, einen Normalfallwert 2 für einen ISDN-Diensteanbieter für kurze Verbindungsdauern DEFAULTISDNPROVIDERSHORTTERM und einen Normalfallwert VOICEMAIL für die Behandlung ankommender Rufe DEFAULTINCOMMINGCALL. Im dargestellten Fall ist als Normalfallwert für die Kommunikationsart eine ISDN-Verbindung vorgesehen und von dem Kommunikationspartner kommende Rufe werden zur Voice-Mail geleitet.

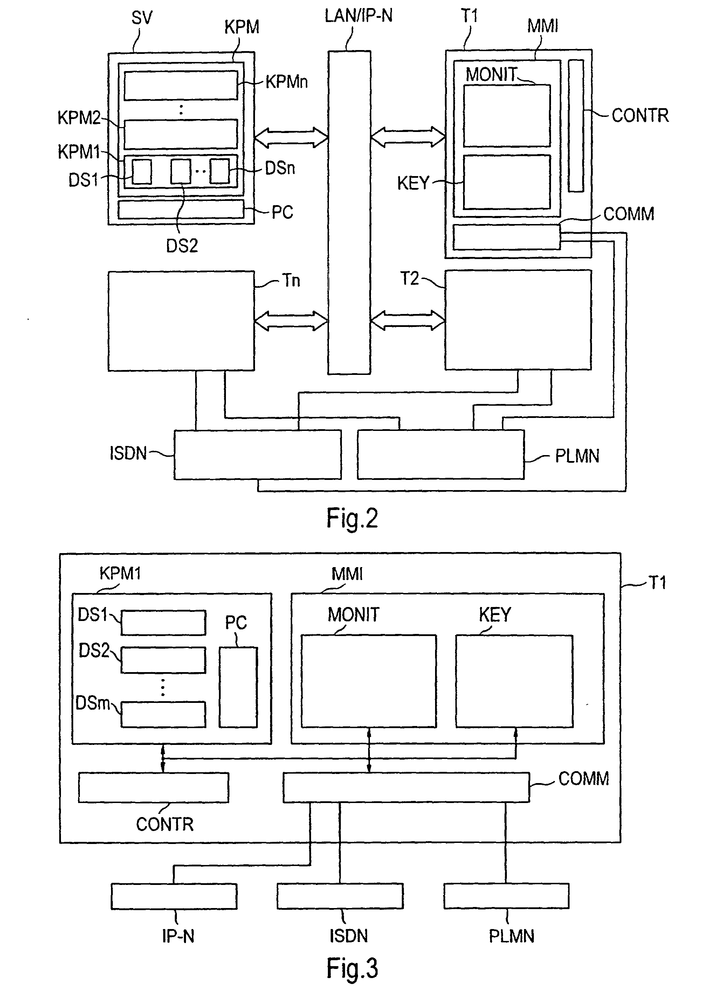

Figur 2 zeigt eine Realisierungsmöglichkeit, wie ein Kommunikationspartner-Verzeichnismodul KPM einem Teilnehmer T1, T2, Tn zugeordnet werden kann. Figur 2 zeigt einen Server SV, in dem das Kommunikationspartner-Verzeichnismodul KPM realisiert ist. Innerhalb dieses Kommunikationspartner-Verzeichnismoduls KPM ist für die Teilnehmer T1, T2, Tn jeweils ein Kommunikationspartner-Verzeichnismodul KPM1, KPM2, KPMn vorgesehen, das dem jeweiligen Teilnehmer mit gleicher Endziffer zugeordnet ist. Hierbei enthält jedes Kommunikationspartner-Verzeichnismodul KPM1, KPM2, KPMn jeweils für jeden Kommunikationspartner einen Datensatz DS1, DS2, DSn. Die Teilnehmer, denen die einzelnen Kommunikationspartner-Verzeichnismodule KPM1, KPM2, KPMn zugeordnet sind, sind in Figur 2 durch Endgeräte T1, T2, Tn repräsentiert. Hierbei enthält jedes dieser Endgeräte eine Steuerung CONTR, eine Mensch-Maschine-Schnittstelle MMI, die im dargestellten Beispiel aus einer Anzeigevorrichtung MONIT und einer Eingabeeinrichtung KEY besteht. Eine komfortablere solche Mensch-Maschine-Schnittstelle MMI hat beispielsweise eine graphische Darstellung des aktuellen Kommunikationspartner-Verzeichnismoduls KPM1 in Form eines elektronischen Adreßbuchs am Monitor MONIT. Der Teilnehmer kann hierbei mit Hilfe der Eingabeeinrichtung KEY, beispielsweise Zeigersteuertasten, die auch Cursortasten genannt werden, in diesem elektronischen Adreßbuch am Monitor MONIT blättern wie in einem üblichen Adreßbuch. Eine weniger komfortable solche Mensch-Maschine-Schnittstelle MMI hat beispielsweise keine graphische Darstellung, sondern nur ein Eingabefeld auf dem Monitor MONIT, um mit Hilfe der Eingabeeinrichtung KEY den Namen oder den Anfangsteil des Namens des gewünschten Kommunikationspartners einzugeben.

Außerdem enthält jedes dieser Endgeräte ein Kommunikationsmodul COMM zum Abwickeln von Kommunikationsvorgängen über ein Kommunikationsnetz. Derartige Kommunikationsnetze sind unter anderem ein digitales Netz integrierter Dienste ISDN, auch ISDN-Netz genannt, ein öffentliches landgestütztes Mobilfunknetz PLMN, auch Mobilfunknetz genannt, und ein Internetprotokollnetz LAN/IP-N. In der schematischen Darstellung der Figur 2 ist hierbei das Datennetz LAN/IP-N, über das die einzelnen Endgeräte T1, T2, Tn auf den Server SV zugreifen, auch als Internetprotokollnetz darstellt. Selbstverständlich kann das Internetprotokollnetz aber auch ein Weitbereichsnetz, wie z.B. das öffentliche Internet sein. Die in Figur 2 jeweils zwischen den einzelnen Endgeräten T1, T2, Tn und dem Internetprotokollnetz LAN/IP-N dargestellte mögliche Verbindung kann zum wahrnehmen zweier Aufgaben verwendet werden. Zum einen hat die Steuerung CONTR die Möglichkeit, auf im Kommunikationsnetz verfügbare Informationen, wie zum Beispiel Inhalte von Kommunikationspartner-Verzeichnismodulen KPM1, KPM2, KPMn, zuzugreifen. Außerdem kann das jeweilige Kommunikationsmodul COMM dieser Endgeräte T1, T2, Tn einen Verbindungsaufbau über das Internetprotokollnetz LAN/IP-N veranlassen.

Wenn ein Teilnehmer mit Hilfe des Kommunikationspartner-Verzeichnismoduls KPM1 vom Endgerät T1 aus einen abgehenden Ruf veranlassen will, gibt er über die Eingabeeinrichtung KEY des Endgerätes T1 den Namen oder mindestens einen Teil des Namens des gewünschten Kommunikationspartners ein. Die Eingabe wird daraufhin an der Anzeigevorrichtung MONIT dargestellt. Nach Bestätigen der dargestellten Eingabe über die Eingabeeinrichtung KEY oder aber unmittelbar nach Eingabe der einzelnen Buchstaben des Namens, wird die entsprechende Information zu dem Server SV übertragen, und die Prozessorsteuerung PC des Kommunikationspartner-Verzeichnismoduls KPM sucht in den Datensätzen DS1, DS2, DSn des dem Endgerät T1 zugeordneten Kommunikationspartner-Verzeichnismodul KPM1 nach dem Datensatz DS1, DS2, DSn, der dem gewünschten Kommunikationspartner zugeordnet ist.

Nach Auffinden des entsprechenden Datensatzes, z.B. des Datensatzes DS2, wird die in diesem Datensatz DS2 enthaltene Information entweder vollständig oder abhängig von einer Eingabe über die Eingabeeinrichtung KEY des Endgerätes T1 sequenzweise zu dem Endgerät T1 übermittelt. Abhängig von der übermittelten Information werden über die Anzeigevorrichtung MONIT Symbole oder bestimmte alphanumerische Zeichen angezeigt. Beispielsweise werden die zu der Eingabe passenden gespeicherten Namen von Kommunikationspartner daraufhin an der Anzeigevorrichtung MONIT dargestellt. Nach der Eingabe der Buchstaben ME erscheint auf der Anzeigevorrichtung MONIT beispielsweise die Darstellung MEHNER, MEIER, MENGES. Der Teilnehmer kann daraufhin mit Hilfe von Zeigersteuertasten der Eingabeeinrichtung KEY den gewünschten Kommunikationspartner markieren und diese Auswahl bestätigen. Nach einer solchen Bestätigung veranlaßt die Steuerung CONTR des Endgerätes T1 ein Kommunikationsmodul COMM des Endgerätes T1, den gewählten Verbindungsaufbau unter Verwendung gespeicherter Kommunikationsparameter-Normalfallwerte zu veranlassen. Falls der Teilnehmer zuvor für diesen Kommunikationsvorgang einzelne Kommunikationsparameter abweichend von für den ausgewählten Kommunikationspartner gespeicherten Kommunikationsparameter-Normalfallwerten festgelegt hat, veranlaßt die Steuerung CONTR des Endgerätes T1 ein Kommunikationsmodul COMM des Endgerätes T1 den Verbindungsaufbau unter Verwendung dieser festgelegten Kommunikationsparameter.

Falls der Teilnehmer nach dem Markieren eines gewünschten Kommunikationspartners keine Bestätigungstaste der Eingabeeinrichtung KEY betätigt, kann er sich beispielsweise durch Eingabe eines entsprechenden Befehls den Inhalt oder einen Teil des Inhaltes des dem markierten Namen zugeordneten Datensatzes anzeigen lassen. Ein Verbindungsaufbau kann dann mit den gespeicherten Kommunikationsparameter-Normalfallwerten, oder gegebenenfalls nach Auswahl von von den angezeigten Kommunikationsparameter-Normalfallwerten abweichenden Kommunikationsparametern mit diesen abweichenden Kommunikationsparametern veranlaßt werden.

Das in Figur 2 gezeigte, in dem zentralen Server SV realisierte Kommunikationspartner-Verzeichnismodul KPM hat den Vorteil, daß nur eine Steuerung für das Kommunikationspartner-Verzeichnismodul für eine Vielzahl von Teilnehmern erforderlich ist. Wenn darüber hinaus, wie in Figur 1 gezeigt, die Datensätze DS1, DS2, DSn in einen allgemeinen Teil CD und einen spezifischen Teil SD aufgeteilt sind, kann der allgemeine Datensatzteil CD der einzelnen Datensätze DS1, DS2, DSn für eine Vielzahl von Teilnehmern mit relativ geringem Aufwand aktualisiert werden.

Figur 3 zeigt eine andere Realisierungsform eines Kommunikationspartnerverzeichnismodul KPM1, das dem Endgerät T1 eines Teilnehmers fest zugeordnet ist. Figur 3 zeigt ein Endgerät T1 mit einer Mensch-Maschine-Schnittstelle MMI, die durch eine Anzeigevorrichtung MONIT und eine Eingabeeinrichtung KEY realisiert ist. Außerdem enthält das Endgerät T1 eine Kommunikationssteuerung CONTR und ein Kommunikationsmodul COMM. Das Kommunikationsmodul COMM ermöglicht dem Endgerät T1 den Zugang zu einem ISDN-Netz ISDN, einem Mobilfunknetz PLMN und einem Internetprotokoll-Netz IP-N. Darüber hinaus ist in dem Endgerät T1 in schematischer Blockdarstellung ein Kommunikationspartner-Verzeichnismodul KPM1 dargestellt. Das Kommunikationspartner-Verzeichnismodul KPM1 ist hierbei zwar innerhalb der Blockdarstellung des Endgerätes T1 darstellt, muß aber nicht unbedingt in demselben Gehäuse wie das Endgerät T1 angeordnet sein. Auch das in Figur 3 gezeigte Kommunikationspartner-Verzeichnismodul KPM1 enthält eine Vielzahl von Datensätzen DS1, DS2, DSn sowie eine Prozessorsteuerung PC.

Bei der in Figur 3 dargestellten Realisierungsform eines einem Teilnehmer zugeordneten Kommunikationspartner-Verzeichnismoduls KPM1 ist das Kommunikationspartner-Verzeichnismodul in einem Endgerät T1 des Teilnehmers angeordnet oder unmittelbar an ein solches Endgerät T1 ankoppelbar. Falls das Kommunikationspartnerverzeichnismodul KPM1 tragbar ausgeführt ist und an Kommunikationsendgeräte ankoppelbar ist, kann ein Teilnehmer dieses Kommunikationspartnerverzeichnismodul KPM1 gegebenenfalls an unterschiedliche Endgeräte ankoppeln.

Der funktionelle Ablauf in einer Anordnung gemäß Figur 3 entspricht dem funktionellen Ablauf einer Anordnung gemäß Figur 2.

Figur 4 zeigt ein Ausführungsbeispiel einer Mensch-Maschine-Schnittstelle MMI zum Steuern eines erfindungsgemäßen Kommunikationspartner-Verzeichnismoduls. Die in Figur 4 dargestellte Mensch-Maschine-Schnittstelle MMI enthält eine Anzeigevorrichtung MONIT und eine Eingabeeinrichtung KEY. Die dargestellte Eingabeeinrichtung KEY enthält neben einer alphanumerischen Tastatur QWERTY noch Cursortasten sowie eine Eingabetaste. Auf der Anzeigevorrichtung MONIT ist der Name NAME1 eines Kommunikationspartners dargestellt, dessen Datensatz von einem Teilnehmer mit Hilfe von Tastatureingaben ausgewählt worden ist. Außerdem sind Kommunikationsmöglichkeiten zu diesem Kommunikationspartner NAME1 dargestellt, nämlich ein Symbol VoISDN/LT für Sprache über ISDN bei längerer Verbindungsdauer, VoISDN/ST für Sprache über ISDN bei kurzer Verbindungsdauer, VoIP für Sprache über Internetprotokoll, VIDEO für Bildtelefonie, E-MAIL für einen elektronischen Postdienst, FAX/LT für eine Faxverbindung mit längerer Übertragungsdauer, FAX/ST für eine Faxverbindung mit kürzerer Übertragungsdauer und VoMSG. für eine Sprachnachricht. Beim Ausführungsbeispiel nach Figur 4 wird davon ausgegangen, daß für den Kommunikationspartner NAME1 im Datensatz DS1 Kommunikationsparameter-Normalfallwerte gespeichert sind, die zu dem Ergebnis führen, daß zu diesem Kommunikationspartner NAME1 üblicherweise eine länger andauernde Sprachverbindung über ein ISDN-Netz veranlaßt werden soll. Daher ist nach Auswählen des Kommunikationspartners NAME1 in dem in Figur 4 dargestellten Ausführungsbeispiel die Zeichenkombination VoISDN/LT vorausgewählt und somit invertiert dargestellt. In diesem Beispiel braucht der Teilnehmer, der den Kommunikationspartner NAME1 ausgewählt hat, nur noch die Eingabetaste in der Eingabeeinrichtung KEY zu betätigen, um eine Sprachverbindung über ISDN unter Verwendung eines für längere Gespräche günstigeren Diensteanbieters zu veranlassen.

## Patentansprüche

1. Kommunikationspartner-Verzeichnismodul (KPM, KPM1, KPM2, KPMn), das einem Teilnehmer (T1, T2, Tn) zugeordnet ist und in dem für Kommunikationspartner dieses Teilnehmers (T1, T2, Tn) jeweils ein Datensatz (DS1, DS2, DSm) gespeichert ist, mit einer Prozessorsteuerung (CONTR), die bei einem vom Teilnehmer (T1, T2, Tn) veranlaßten aktuellen Kommunikationsvorgang zu einem Kommunikationspartner (name1) abhängig von für diesen Kommunikationspartner (name1) und für den Teilnehmer (T1, T2, Tn) spezifisch gespeicherten Kommunikationsparameter-Normalfallwerten (DEFAULTKA, DEFAULTISDNPROVIDERLONGTERM, DEFAULTISDNPROVIDERSHORTTERM, DEFAULTINCOMMINGCALL) Kommunikationsparameter festlegt, sofern der Teilnehmer (T1, T2, Tn) für den aktuellen Kommunikationsvorgang keine hiervon abweichenden Kommunikationsparameter gewählt hat.

2. Kommunikationspartnerverzeichnismodul (KPM, KPM1, KPM2, KPMn) nach Anspruch 1,
**dadurch gekennzeichnet, daß** die fürden Kommunikationspartner (name1) und für den Teilnehmer (T1,T2, Tn) spezifisch gespeicherten Kommunikationsparameter-Normalfallwerte (DEFAULTKA, DEFAULTISDNPROVIDERLONGTERM, DEFAULTISDNPROVIDERSHORTTERM, DEFAULTINCOMMINGCALL) vom Teilnehmer (T1, T2, Tn) wählbar sind.

3. Kommunikationspartnerverzeichnismodul (KPM, KPM1, KPM2, KPMn) nach einem der vorhergehenden Ansprüche,
**dadurch gekennzeichnet, daß** die Prozessorsteuerung (CONTR) die vom Teilnehmer (T1, T2, Tn) bezüglich eines Kommunikationspartners (name1) gewählten, vom Kommunikationsparameter-Normalfallwert (DEFAULTKA, DEFAULTISDNPROVIDERLONGTERM, DEFAULTISDNPROVIDERSHORTTERM, DEFAULTINCOMMINGCALL) abweichenden Kommunikationsparameter statistisch erfaßt und einen vom Normalfallwert (DEFAULTKA, DEFAULTISDNPROVIDERLONGTERM, DEFAULTISDNPROVIDERSHORTTERM, DEFAULTINCOMMINGCALL) abweichenden Wert eines Kommunikationsparameters vorschlägt, falls dieser Wert häufiger gewählt wird als der gespeicherte Normalfallwert (DEFAULTKA, DEFAULTISDNPROVIDERLONGTERM, DEFAULTISDNPROVIDERSHORTTERM, DEFAULTINCOMMINGCALL).

4. Kommunikationspartnerverzeichnismodul nach einem der vorhergehenden Ansprüche,
**dadurch gekennzeichnet, daß** nach dem Auswählen eines Kommunikationspartners (name1) auf einer Benutzeroberfläche (MMI) mehrere auswählbare Kommunikationsmöglichkeiten zu diesem Kommunikationspartner (name1) angezeigt werden, und daß abhängig von den gespeicherten Kommunikationsparameter-Normalfallwerten (DEFAULTKA, DEFAULTISDNPROVIDERLONGTERM, DEFAULTISDNPROVIDERSHORTTERM, DEFAULTINCOMMINGCALL) eine Auswahl erfolgt.

5. Kommunikationspartnerverzeichnismodul nach einem der vorhergehenden Ansprüche,
**dadurch gekennzeichnet, daß** die Prozessorsteuerung (CONTR) den vom Normalfallwert (DEFAULTKA, DEFAULTISDNPROVIDERLONGTERM, DEFAULTISDNPROVIDERSHORTTERM, DEFAULTINCOMMINGCALL) abweichenden Wert vorschlägt, wenn die Häufigkeit, mit der der vom Normalfallwert (DEFAULTKA, DEFAULTISDNPROVIDERLONGTERM, DEFAULTISDNPROVIDERSHORTTERM, DEFAULTINCOMMINGCALL) abweichende Wert gewählt worden ist, die Häufigkeit, mit der der Normalfallwert (DEFAULTKA, DEFAULTISDNPROVIDERLONGTERM, DEFAULTISDNPROVIDERSHORTTERM, DEFAULTINCOMMINGCALL) verwendet worden ist um einen vorbestimmten Wert überschreitet.

6. Kommunikationspartnerverzeichnismodul nach einem der vorhergehenden Ansprüche,
**dadurch gekennzeichnet, daß** die Datensätze (DS1, DS2, DSn, DSm) von Kommunikationspartnern (name1) jeweils einen allgemeinen, Kommunikationsadressen (ISDNaddress, FAX-address, VOICE MESSAGE, E-MAIL, PLMN-address) dieses Kommunikationspartners (name1) enthaltenden Datensatzteil (CD) und einen für den Teilnehmer (T1, T2, Tn) spezifischen Datensatzteil (SD) enthalten, wobei die für den Teilnehmer (T1, T2, Tn) spezifisch gespeicherten Kommunikationsparameternormalfallwerte (DEFAULTKA, DEFAULTISDNPROVIDERLONGTERM, DEFAULTISDNPROVIDERSHORTTERM, DEFAULTINCOMMINGCALL) in dem spezifischen Datensatzteil (SD) enthalten sind.

## Claims

1. Communication-partner directory module (KPM, KMP1, KMP2, KPMn) which is associated with a subscriber (T1, T2, Tn) and stores a respective data record (DS1, DS2, DSm) for communication partners associated with this subscriber (T1, T2, Tn), having a processor controller (CONTR) which, for a current communication procedure prompted by the subscriber (T1, T2, Tn), stipulates communication parameters for a communication partner (name1) on the basis of communication-parameter default values (DEFAULTKA, DEFAULTISDNPROVIDERLONGTERM, DEFAULTISDNPROVIDERSHORTTERM, DEFAULTINCOMMINGCALL) stored specifically for this communication partner (name1) and for the subscriber (T1, T2, Tn) if the subscriber (T1, T2, Tn) has not chosen any communication parameters which differ therefrom for the current communication procedure.

2. Communication-partner directory module (KMP, KMP1, KMP2, KPMn) according to Claim 1,
**characterized in that** the communication-parameter default values (DEFAULTKA, DEFAULTISDNPROVIDERLONGTERM, DEFAULTISDNPROVIDERSHORTTERM, DEFAULTINCOMMINGCALL) stored specifically for the communication partner (name1) and for the subscriber (T1, T2, Tn) can be chosen by the subscriber (T1, T2, Tn).

3. Communication-partner directory module (KMP, KMP1, KMP2, KMPn) according to one of the preceding claims,
**characterized in that** the processor controller (CONTR) statistically records those communication parameters chosen by the subscriber (T1, T2, Tn) for a communication partner (name1) which differ from the communication-parameter default value (DEFAULTKA, DEFAULTISDNPROVIDERLONGTERM, DEFAULTISDNPROVIDERSHORTTERM, DEFAULTINCOMMINGCALL) and proposes a communication-parameter value which differs from the default value (DEFAULTKA, DEFAULTISDNPROVIDERLONGTERM, DEFAULTISDNPROVIDERSHORTTERM, PROVIDERINCOMMINGCALL) if this value is chosen more frequently than the stored default value (DEFAULTKA, DEFAULTISDNPROVIDERLONGTERM, DEFAULTISDNPROVIDERSHORTTERM, DEFAULTINCOMMINGCALL).

4. Communication-party directory module according to one of the preceding claims,
**characterized in that**, following selection of a communication partner (name1) on a user interface (MMI), a plurality of selectable communication options for this communication partner (name1) are indicated, and **in that** a selection is made on the basis of the stored communication-parameter default values (DEFAULTKA, DEFAULTISDNPROVIDERLONGTERM, DEFAULTISDNPROVIDERSHORTTERM, DEFAULTINCOMMINGCALL).

5. Communication-partner directory module according to one of the preceding claims,
**characterized in that** the processor controller (CONTR) proposes the value which differs from the default value (DEFAULTKA, DEFAULTISDNPROVIDERLONGTERM, DEFAULTISDNPROVIDERSHORTTERM, DEFAULTINCOMMINGCALL) if the frequency with which the value differing from the default value (DEFAULTKA, DEFAULTISDNPROVIDERLONGTERM, DEFAULTISDNPROVIDERSHORTTERM, DEFAULTINCOMINGCALL) has been chosen exceeds the frequency with which the default value (DEFAULTKA, DEFAULTISDNPROVIDERLONGTERM, DEFAULTISDNPROVIDERSHORTTERM, DEFAULTINCOMMINGCALL) has been used by a predetermined value.

6. Communication-partner directory module according to one of the preceding claims,
**characterized in that** the data records (DS1, DS2, DSn, DSm) for communication partners (name1) respectively contain a general data-record part (CD), which contains communication addresses (ISDN address, FAX address, VOICE MESSAGE, E-MAIL, PLMN address) for this communication partner (name1), and a data-record part (SD) which is specific to the subscriber (T1, T2, Tn), the communication-parameter default values (DEFAULTKA, DEFAULTISDNPROVIDERLONGTERM, DEFAULTISDNPROVIDERSHORTTERM, DEFAULTINCOMMINGCALL) stored specifically for the subscriber (T1, T2, Tn) being contained in the specific data-record part (SD).

## Revendications

1. Module de répertoire de partenaires de communication (KPM, KPM1, KPM2, KPMn), qui est affecté à un abonné (T1, T2, Tn) et dans lequel est mémorisé un jeu de données (DS1, DS2, DSn) pour chaque partenaire de communication de cet abonné (T1, T2, Tn), avec une commande à processeur (CONTR) qui, lors d'un processus de communication actuel déclenché par l'abonné (T1, T2, Tn) vers un partenaire de communication (name1), fixe, en fonction de valeurs des paramètres de communication correspondant au cas normal (DEFAULTKA, DEFAULTISDNPROVIDERLONGTERM, DEFAULTISDNPROVIDERSHORTTERM, DEFAULTINCOMINGCALL), mémorisées spécifiquement pour ce partenaire de communication (name1) et pour l'abonné (T1, T2, Tn), des paramètres de communication, dans la mesure où l'abonné (T1, T2, Tn) n'a choisi, pour le processus actuel de communication, aucun paramètre de communication qui en diffère.

2. Module de répertoire de partenaires de communication (KPM, KPM1, KPM2, KPMn) selon la revendication 1
**caractérisé par le fait que** les valeurs des paramètres de communication correspondant au cas normal (DEFAULTKA, DEFAULTISDNPROVIDERLONGTERM, DEFAULTISDNPROVIDERSHORTTERM, DEFAULTINCOMINGCALL), mémorisées spécifiquement pour le partenaire de communication (name1) et pour l'abonné (T1, T2, Tn) peuvent être sélectionnées.

3. Module de répertoire de partenaires de communication (KPM, KPM1, KPM2, KPMn) selon l'une des revendications précédentes
**caractérisé par le fait que** la commande à processeur (CONTR) collecte statistiquement les paramètres de communication sélectionnés par l'abonné (T1, T2, Tn) en relation avec un partenaire de communication (name1) et qui diffèrent des valeurs des paramètres de communication correspondant au cas normal (DEFAULTKA, DEFAULTISDNPROVIDERLONGTERM, DEFAULTISDNPROVIDERSHORTTERM, DEFAULTINCOMINGCALL) et propose une valeur pour un paramètre de communication qui diffère de la valeur correspondant au cas normal (DEFAULTKA, DEFAULTISDNPROVIDERLONGTERM, DEFAULTISDNPROVIDERSHORTTERM, DEFAULTINCOMINGCALL), dans le cas où cette valeur a été sélectionnée plus fréquemment que la valeur mémorisée correspondant au cas normal (DEFAULTKA, DEFAULTISDNPROVIDERLONGTERM, DEFAULTISDNPROVIDERSHORTTERM, DEFAULTINCOMINGCALL).

4. Module de répertoire de partenaires de communication selon l'une des revendications précédentes
**caractérisé par le fait que**, après la sélection d'un partenaire de communication (name1) sur une interface utilisateur (MMI), plusieurs possibilités de communication, qui peuvent être sélectionnées, sont affichées pour ce partenaire de communication (name1) et que, en fonction des valeurs mémorisées des paramètres de communication correspondant au cas normal (DEFAULTKA, DEFAULTISDNPROVIDERLONGTERM, DEFAULTISDNPROVIDERSHORTTERM, DEFAULTINCOMINGCALL), une sélection est effectuée.

5. Module de répertoire de partenaires de communication selon l'une des revendications précédentes
**caractérisé par le fait que** la commande à processeur (CONTR) propose une valeur différente de la valeur correspondant au cas normal (DEFAULTKA, DEFAULTISDNPROVIDERLONGTERM, DEFAULTISDNPROVIDERSHORTTERM, DEFAULTINCOMINGCALL), lorsque la fréquence, avec laquelle la valeur différente de la valeur correspondant au cas normal (DEFAULTKA, DEFAULTISDNPROVIDERLONGTERM, DEFAULTISDNPROVIDERSHORTTERM, DEFAULTINCOMINGCALL), dépasse d'une valeur donnée la fréquence avec laquelle la valeur correspondant au cas normal (DEFAULTKA, DEFAULTISDNPROVIDERLONGTERM, DEFAULTISDNPROVIDERSHORTTERM, DEFAULTINCOMINGCALL) a été utilisée.

6. Module de répertoire de partenaires de communication selon l'une des revendications précédentes
**caractérisé par le fait que** chaque jeu de données (DS1, DS2, DSn, DSm) de partenaires de communication (name1) renferme une partie générale (CD) du jeu de données, comprenant des adresses de communication (adresse RNIS (ou, en anglais, ISDN), adresse fax, adresse de message vocal (ou, en anglais, VOICE MESSAGE), adresse de courrier électronique (ou, en anglais, Email), adresse de réseau public de radio mobile PLMN) de ce partenaire de communication (name1), et une partie (SD) du jeu de données spécifique à l'abonné (T1, T2, Tn), les valeurs, mémorisées spécifiquement pour l'abonné (T1, T2, Tn), des paramètres de communication correspondant au cas normal (DEFAULTKA, DEFAULTISDNPROVIDERLONGTERM, DEFAULTISDNPROVIDER-SHORTTERM, DEFAULTINCOMINGCALL) étant contenues dans la partie (SD) spécifique du jeu de données.
